Europäisches Patentamt

European Patent Office

Office européen des brevets

(19)

(11) Numéro de publication : **0 105 798**
**B1**

(12)                    **FASCICULE DE BREVET EUROPÉEN**

(45) Date de publication du fascicule du brevet :
06.05.87

(51) Int. Cl.⁴ : **H 01 M   6/36**, H 01 M   4/58

(21) Numéro de dépôt : **83401902.8**

(22) Date de dépôt : **28.09.83**

(54) **Perfectionnement apporté aux piles thermiques à cathode de chromate de calcium.**

(30) Priorité : **28.09.82 FR 8216288**

(43) Date de publication de la demande :
**18.04.84 Bulletin 84/16**

(45) Mention de la délivrance du brevet :
**06.05.87 Bulletin 87/19**

(84) Etats contractants désignés :
**DE GB IT NL SE**

(56) Documents cités :
**FR-A- 2 018 200**
**GB-A- 1 349 768**
**US-A- 4 041 217**
**CHEMICAL ABSTRACTS, vol. 83, 1975, page 277,
résumé no. 118592m, COLUMBUS, OHIO (US)**

(73) Titulaire : **SOCIETE NATIONALE INDUSTRIELLE
AEROSPATIALE Société dite:
37 Boulevard de Montmorency
F-75781 Paris Cedex 16 (FR)**

(72) Inventeur : **Tremillon, Bernard
44, rue de Gometz
F-91440 Bures sur Yvette (FR)**
Inventeur : **Picard, Gérard
2, rue du Séminaire de Conflans
F-94220 Charenton le Pont (FR)**
Inventeur : **Riffault, Françoise
10, rue des Minimes
F-45000 Orleans (FR)**

(74) Mandataire : **Rinuy, Guy et al
Cabinet Rinuy et Santarelli 14, Avenue de la Grande
Armée
F-75017 Paris (FR)**

## Description

La présente invention se rapporte aux améliorations de fonctionnement des piles thermiques à cathode de chromate de calcium CaCrO₄, principalement à une augmentation de la force électromotrice (f.e.m.) et à une meilleure stabilité de cette dernière au cours du temps.

Dans la présente description, on désigne par pile thermique, un générateur électrochimique comprenant une électrode positive et une électrode négative entre lesquelles est disposée une couche d'un électrolyte solide généralement constitué d'un sel minéral fusible non conducteur à température ambiante, mais devenant conducteurs lors de sa fusion par chauffage produisant alors de l'électricité par des réactions électrochimiques entre l'anode et la cathode.

On entend plus généralement par « batterie thermique » tout ensemble comprenant plusieurs générateurs électrochimiques du type ci-dessus rappelé reliés en parallèle ou en série, des moyens capables de produire la chaleur nécessaire à l'échauffement desdits générateurs et les éventuels moyens d'isolation thermique assurant le maintien d'une température convenable pendant au moins la durée de fonctionnement.

Ces batteries thermiques sont utilisées comme source d'énergie dans de nombreuses applications, notamment celles nécessitant de longues durées de stockage.

De nombreux systèmes électrochimiques sont employés dans les piles thermiques. Le choix de la cathode est l'un des facteurs déterminant la f.e.m. de la pile. Les composés les plus fréquemment utilisés sont les polysulfures (sulfure de fer FeS et FeS₂, ou de titane TiS₂) les oxydes supérieurs (oxydes de tungstène WO₃, oxyde de fer αFe₂O₃, pentoxyde de vanadium V₂O₅) ou le chromate de calcium CaCrO₄.

A titre d'exemple, on citera les articles :

de A. Nissen « A study of the anode — Electrolyte interface in a thermal battery », J. Electrochem. Soc., *126*, (1979), 176, dans lequel est décrite une cellule de pile thermique composée d'une anode de calcium, déposé par évaporation sur un disque de fer, d'un disque d'électrolyte (eutectique LiCl-KCl 56 % masse) contenant un gélifiant (SiO₂ 7 % masse) et le dépolarisant (CaCrO₄ 37 % masse) et d'un disque de fer servant de collecteur de courant ;

de H. M. Thackeray et J. Coetzer, « a preliminary investigation of the electrochemical performance of αFe₂O₃ and Fe₃O₄ — Cathodes in high temperature cells » Mat. Res. Bull., *16*, (1981), 591 décrivent des piles à électrolyte fondu (eutectique LiCl KCl), dont la cathode est constituée par un mélange d'oxyde de fer αFe₂O₃ et de poudre conductrice de graphite ; et

de Z. Tomczuk et al. « Evaluation of high temperature LiAl/TiS₂ Cells » J. Electrochem. Soc., *127* (1980), 1881 qui décrit une cellule de pile thermique à électrolyte fondu (eutectique LiCl KCl) dont la cathode est à base de sulfure de titane TiS₂.

Dans le cas des piles thermiques à chromate de calcium CaCrO₄, celui-ci est soit l'un des constituants d'une pastille contenant en outre l'électrolyte fusible et le gélifiant, soit aggloméré sur un collecteur de courant. L'électrolyte est un mélange de chlorures alcalins, plus particulièrement l'eutectique LiCl KCl. L'espace interélectrodes est maintenu constant par une trame isolante qui retient l'eutectique lorsqu'il est fondu ou par adjonction d'un gélifiant.

Malheureusement dans les piles thermiques à chromate de calcium, la réduction de l'électrode positive en oxyde de chrome Cr₂O₃ entraîne une augmentation de la concentration d'ions oxyde O²⁻ au sein de l'électrode. Cette augmentation provoque une baisse de la f.e.m. puisque le potentiel du système électrochimique Cr (III)/Cr (VI), est proportionnel au cologarithme de la concentration d'ions O²⁻.

Or le but de l'invention est de stabiliser la f.e.m. de la pile thermique au cours de la décharge et d'améliorer sa valeur.

Selon la présente invention, ce but est atteint par adjonction d'un tampon d'ions oxyde dans l'eutectique LiCl KCl. Ce tampon d'ions O²⁻ est le couple oxoacide-oxobase chromate de calcium/bichromate de calcium. On constate alors, grâce à cette adjonction que la concentration d'ions O²⁻ est constante dans l'eutectique LiCl KCl ; que la f.e.m. de la pile est stable ; que cette concentration est plus faible puisqu'un oxoacide est ajouté ; et que la f.e.m. est plus élevée.

Suivant une forme de réalisation avantageuse, la cellule unitaire comprend :

une électrode négative en calcium fixé à un collecteur en nickel ou acier inoxydable ;

un électrolyte LiCl-KCl en mélange eutectique retenu dans l'espace interélectrodes par l'intermédiaire d'un gel ou d'une maille inerte ;

une électrode positive constituée d'un mélange homogène d'électrolyte, de chromate de calcium et de bichromate de calcium.

De façon plus particulière l'électrode positive est constituée d'un mélange homogène de composition massique : électrolyte 33 %, chromate de calcium-bichromate de calcium 67 %.

Le rapport de bichromate de calcium sur chromate de calcium peut être compris entre 1 et 5.

Une telle cellule est activée thermiquement par l'intermédiaire d'un mélange pyrotechnique à base de zirconium et de chromate de baryum BaCrO₄.

Les autres caractéristiques et avantages de l'invention ressortiront plus clairement de la description qui va suivre faite en regard des dessins annexés sur lesquels :

la figure 1 est une vue schématique d'une cellule selon l'invention ; et

la figure 2 illustre l'évolution de la f.e.m. exprimée en volts (V) en fonction du temps dans des cellules réalisées selon l'invention, comparativement à une cellule ne comportant pas le perfectionnement selon l'invention.

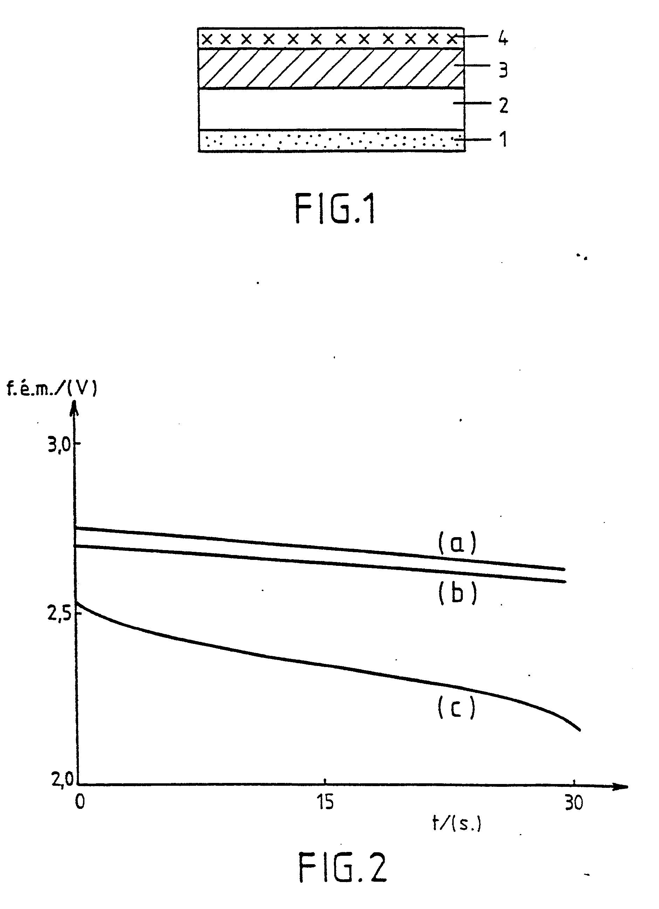

En se référant à la figure 1, on a désigné par la référence 1 l'électrode positive, par la référence 2 l'électrolyte, par la référence 3 l'électrode négative et enfin par la référence 4 la composition pyrotechnique.

Pour évaluer les possibilités qu'offre une telle cellule, on l'a branchée, dès activation, à un dispositif électrique tel que le débit soit de 200 mA/cm² d'électrode.

Les courbes de la figure 2 représentent l'évolution de la f.e.m. dans chacun des trois cas suivants :

c) cellule de référence sans ajout de $CaCr_2O_7$, (1/3 électrolyte, 2/3 $CaCrO_4$)

b) cellule obtenue en remplaçant les deux tiers du chromate de calcium par le bichromate de calcium, (1/6 $CaCrO_4$-1/2 $CaCr_2O_7$)

a) cellule obtenue en remplaçant la moitié du chromate de calcium par le bichromate de calcium, (1/3 $CaCrO_4$-1/3 $CaCr_2O_7$).

A l'examen de ces courbes, on voit immédiatement que la f.e.m. est plus élevée dans les cas (a) et (b) et que cette f.e.m. est stabilisée comparativement aux cas (c).

Il va du reste de soi que la présente invention n'a été décrite qu'à titre purement explicatif et nullement limitatif.

## Revendications

1. Pile thermique à force électromotrice stable comprenant une électrode négative en calcium fixé à un collecteur en nickel ou en acier inoxydable, un électrolyte LiCl-KCl en mélange eutectique retenu dans l'espace interélectrode par l'intermédiaire d'un gel ou d'une maille inerte et une électrode positive, caractérisée par le fait que cette électrode positive est constituée d'un mélange homogène d'électrolyte de chromate de calcium et de bichromate de calcium.

2. Pile selon la revendication 1, caractérisée par le fait que ledit mélange homogène comprend 33 % en poids d'électrolyte et 67 % en poids de chromate de calcium-bichromate de calcium.

## Claims

1. Thermal cell with steady electromotive force, which comprises a calcium negative electrode attached to a nickel or stainless steel collector, an LiCl-KCl eutectic mixture electrolyte held in the inter-electrode space by means of a gel or an inert meshwork and a positive electrode, characterized in that this positive electrode consists of a homogeneous mixture of the electrolyte, calcium chromate and calcium dichromate.

2. Cell according to Claim 1, characterized in that the said homogeneous mixture consists of 33 % by weight of the electrolyte and 67 % by weight of calcium chromate-calcium dichromate.

## Patentansprüche

1. Thermische Zellen mit stabiler elektromotorischer Kraft, umfassend eine negative Calciumelektrode, welche an einen Kollektor aus Nickel oder aus rostfreiem Stahl fixiert ist, einen LiCl-KCl-Electrolyten in eutektischer Mischung, welcher in dem Zwischenraum zwischen den Elektroden unter Mitwirkung eines Gels oder eines inerten Maschenwerks gehalten wird, und eine positive Elektrode, dadurch gekennzeichnet, daß diese positive Elektrode aus einem homogenen Gemisch von Elektrolyten, von Calciumchromat und von Calciumdichromat gebildet wird.

2. Zelle nach Anspruch 1, dadurch gekennzeichnet, daß dieses homogene Gemisch 33 Gew.-% Elektrolyt und 67 Gew.-% Calciumchromat/Calciumdichromat umfaßt.

FIG.1

FIG.2